# EUROPÄISCHE PATENTSCHRIFT

(11) **EP 1 245 365 B1**
(45) Veröffentlichungstag und Bekanntmachung des Hinweises auf die Patenterteilung: **31.03.2004**
(21) Anmeldenummer: 02003918.6
(22) Anmeldetag: 21.02.2002
(51) Int. Cl.: B29C 47/08, B65H 23/32

(54) **Luftwendestange**
AIR TURNING BAR
BARRE DE RETOURNEMENT A AIR

(30) Priorität: 28.03.2001 DE 10115259
(43) Veröffentlichungstag der Anmeldung: 02.10.2002
(73) Patentinhaber: Kiefel Extrusion Gmbh, D-67547 Worms (DE)
(72) Erfinder: Gandelheidt, Edgar, 67551 Worms (DE)
(74) Vertreter: Zmyj, Erwin, Dipl.-Ing., Dipl.-Wirtsch.-Ing., European Patent Attorney

(56) Entgegenhaltungen:
- DE-A- 2 623 580
- DE-A- 4 440 647
- DE-B- 1 170 613

## Beschreibung

Die Erfindung bezieht sich auf eine Luftwendestange für eine Abzugsvorrichtung für Kunststofffolien, bei der in dem von der Kunststofffolie bei ihrem Transport umschlungenen Bereich ihrer Umfangsfläche Luftaustrittsöffnungen vorgesehen sind.

Bei einer aus der EP 0 992 334 A2 bekannten Luftwendestange ist diese zur Erzeugung eines Luftpolsters im Umschlingungsbereich der Kunststofffolie über ihre gesamte Länge durchgebogen und so eingestellt, daß die konkave Seite sich im wesentlichen im Scheitelpunkt der Umlenkung befindet. Hierdurch entsteht zwischen der Folie und der Luftwendestange ein verhältnismäßig großer Hohlraum, zu dessen Auffüllung viel Druckluft benötigt wird. Weiterhin ist wegen der Durchbiegung der Luftwendestange nur ein verhältnismäßig kleiner Randbereich an den Seitenrändern der Folie vorhanden, der für eine Abdichtung des Luftpolsters in Frage kommt. Weiterhin ist es schwierig eine gleichmäßige Durchbiegung der Luftwendestange herzustellen. Schließlich kann es wegen der Durchbiegung der Luftwendestange bei einer Verstellung in Umfangsrichtung zu Problemen wegen einer Berührung zwischen Folie und Luftwendestange in unerwünschter Weise kommen.

Aus der DE 44 40 647 C2 ist eine Luftwendestange mit einer konkaven Ausbildung der Oberfläche bekannt, wobei sich diese konkave Oberfläche über die gesamte Länge der Luftwendestange erstreckt und somit grundsätzlich die gleichen Nachteile wie diejenige Luftwendestange nach der EP 0 992 334 A2 jedoch in verstärktem Maße aufweist, da die konkave Gestaltung sich über den gesamten Umschlingungsbereich erstreckt. Dadurch entsteht ein noch größerer Hohlraum zwischen der Folie und der Luftwendestange, zu dessen Auffüllung noch größere Luftmengen benötigt werden. Weiterhin ist auch bei dieser bekannten Luftwendestange wegen der konkaven Ausbildung über die gesamte Länge der Luftwendestange nur ein verhältnismäßig kleiner Randbereich an den Seitenrändern der Folie vorhanden, der für eine Abdichtung des Luftpolsters in Frage kommt.

Aufgabe der Erfindung ist es, eine Luftwendestange zu schaffen, bei der ein genau begrenzbarer Luftpolsterbereich zur Verfügung gestellt werden kann, ohne die Nachteile einer über die gesamte Länge konkav gestalteten oder einer gebogenen Luftwendestange hinsichtlich ihrer Herstellung und ihrer Begrenzung bei einer Verstellung in Umfangsrichtung in Kauf nehmen zu müssen.

Diese Aufgabe wird bei einer Luftwendestange der eingangs erläuterten Art erfindungsgemäß dadurch gelöst, dass die Luftwendestange zumindest in einem Teil des Umschlingungsbereiches eine Vertiefung gegenüber dem verbleibenden kreiszylindrischen Umfang aufweist.

Eine Vertiefung in der Luftwendestange läßt sich den jeweiligen Erfordernissen anpassen, ohne daß in dem übrigen Bereich eine Abweichung von der kreiszylindrischen Form der Luftwendestange vorliegt, die mögliche Störungen in Bezug auf die umlaufende Kunststofffolie auslösen könnte. Weiterhin ist die Einbringung einer Vertiefung einfacher zu bewerkstelligen als die Durchbiegung einer ganzen Stange und zwar in einer vorgegebenen, exakten Form. Durch die Vertiefung kann der Luftpolsterraum entsprechend den Erfordernissen gestaltet werden, was bei einer Durchbiegung der Luftwendestange nicht in diesem Maße möglich ist, weil der Luftpolsterraum aufgrund der Durchbiegung zwangsläufige, unterschiedliche Dickenabmessungen längs der Luftwendestange aufweist. Die Vertiefung kann, ohne daß der übrige Umfang der Luftwendestange beeinflußt wird, in ihrer Form und Tiefe den jeweiligen Verhältnissen angepaßt werden.

Die Vertiefung kann in Weiterbildung der Erfindung durch eine Eindrückung einer hohlen Luftwendestange erzeugt werden oder es besteht auch die Möglichkeit die Vertiefung durch eine Aussparung zu erzeugen.

Eine weitere vorteilhafte Ausgestaltung der Erfindung besteht darin, daß die Luftwendestange an den Enden der Vertiefung in Längsrichtung der Luftwendestange gesehen jeweils einen Streifen mit kreiszylindrischem Umfang aufweist. Hierdurch kann im Gegensatz zu einer durchgebogenen Luftwendestange im Randbereich ein größerer Widerstand gegen ein Abströmen von Luft in Längsrichtung der Luftwendestange eingestellt und damit Leckverluste vermindert werden. Je nach den vorliegenden Bedürfnissen kann die Vertiefung an ihrem Rand einen abgerundeten Übergangsbereich zum kreiszylindrischen Bereich aufweisen oder die Vertiefung kann an ihrem Rand durch eine scharfe Kante begrenzt sein. Diese Gestaltungsmöglichkeiten sind bei einer insgesamt durchgebogenen Luftwendestange nicht gegeben.

Die Vertiefung kann zumindest eine in Längsrichtung der Vertiefung ausgerichtete Reihe von Luftaustrittsöffnungen aufweisen oder es können mehrere Luftaustrittsöffnungen über die Fläche der Vertiefung verteilt sein, was von der Form der Vertiefung, der größe der Luftaustrittsöffnungen, der Breite der abzuziehenden Kunststofffolie usw. abhängen kann.

Wenn in Weiterbildung der Erfindung die Luftwendestange in Umfangsrichtung verdrehbar und feststellbar ist, so kann die Lage der Vertiefung gegenüber der Kunststofffolie und damit der Einfluß des Luftpolsters auf die Kunststofffolie verändert werden.

Die Erfindung wird nachfolgend anhand eines Ausführungsbeispieles näher erläutert. In der Zeichnung zeigen:

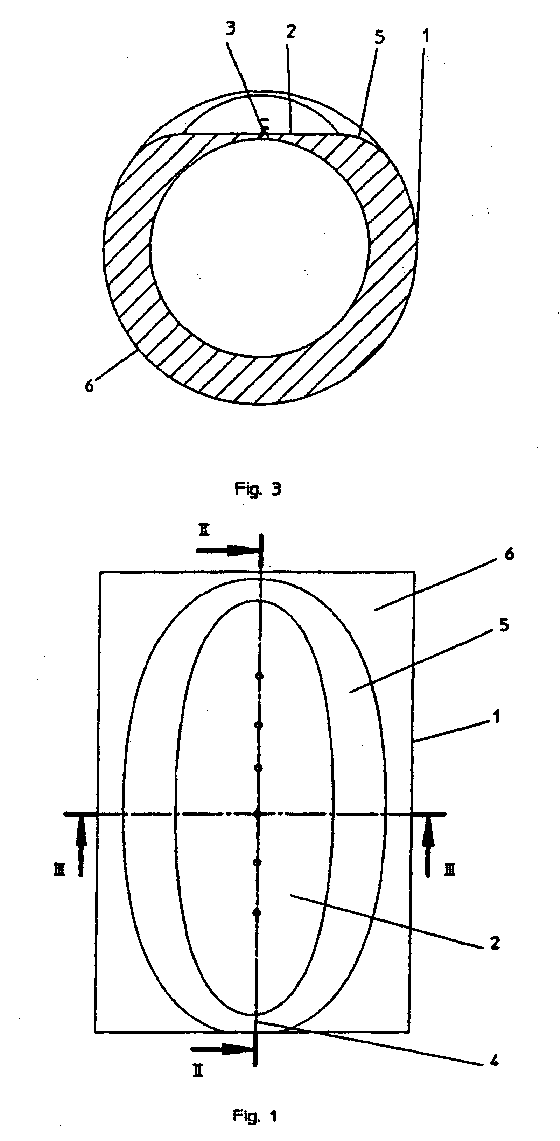

- **Figur 1:**: eine Draufsicht auf eine Luftwendestange;
- **Figur 2:**: einen Schnitt nach der Linie II-II in Figur 1;
- **Figur 3:**: einen Schnitt nach der Linie III-III in Figur 1; und

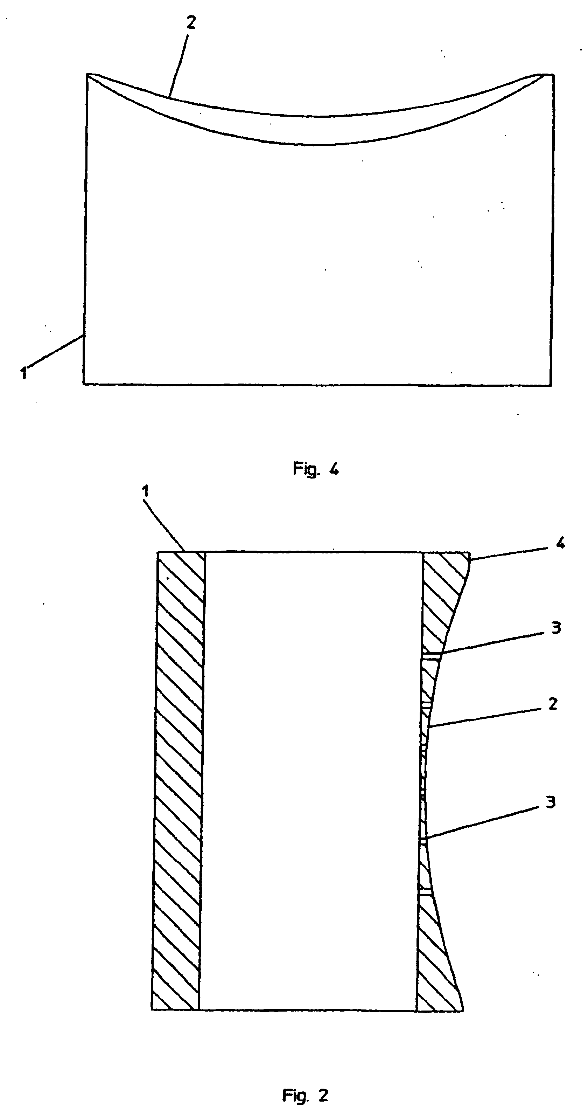

- **Figur 4:**: eine Seitenansicht.

Wie aus der zeichnerischen Darstellung ersichtlich, weist eine Luftwendestange 1 einen zylindrischen Hohlkörper auf, der in einem bestimmten Bereich, welcher den Umschlingungsbereich für eine nicht dargestellte, zu transportierende Kunststofffolie bildet, eine Vertiefung 2 aufweist, welche in Längsrichtung der Luftwendestange 1 gesehen, eine Reihe von Luftaustrittsöffnungen 3 aufweist, die im Bereich dieser Vertiefung 2 ein Luftpolster erzeugen, um ein Anliegen der zu transportierenden Kunststofffolie an der Luftwendestange zu vermeiden. An jedem Ende der Vertiefung 2 verbleibt in Längsrichtung gesehen ein schmaler, mit 4 bezeichneter Bereich, der den üblichen kreiszylindrischen Querschnitt der Luftwendestange aufweist und der für eine Verringerung von Leckverlusten sorgt. Ein mit 5 bezeichneter Übergangsbereich von der Vertiefung zum kreiszylindrischen Umfang 6 ist mit 5 bezeichnet und weist im dargestellten Ausführungsbeispiel eine abgerundete Gestaltung auf.

## Patentansprüche

1. Luftwendestange für eine Abzugsvorrichtung für Kunststofffolien, bei der in dem von der Kunststofffolie bei ihrem Transport umschlungenen Bereich ihrer Umfangsfläche Luftaustrittsöffnungen vorgesehen sind, **dadurch gekennzeichnet, dass** die Luftwendestange (1) zumindest in einem Teil des Umschlingungsbereiches eine Vertiefung (2) gegenüber dem verbleibenden kreiszylindrischen Umfang (6) aufweist.

2. Luftwendestange nach Anspruch 1, **dadurch gekennzeichnet, dass** die Vertiefung (2) durch eine Eindrükkung einer hohlen Luftwendestange erzeugt ist.

3. Luftwendestange nach Anspruch 1, **dadurch gekennzeichnet, dass** die Vertiefung (2) durch eine Aussparung erzeugt ist.

4. Luftwendestange nach einem der Ansprüche 1 bis 3, **dadurch gekennzeichnet, dass** die Luftwendestange (1) an den Enden der Vertiefung (2) in Längsrichtung der Luftwendestange gesehen, jeweils einen Streifen (4) mit kreiszylindrischem Umfang aufweist.

5. Luftwendestange nach einem der Ansprüche 1 bis 4, **dadurch gekennzeichnet, dass** die Vertiefung (2) an ihrem Rand einen abgerundeten Übergangsbereich (5) zum kreiszylindrischen Bereich (6) aufweist.

6. Luftwendestange nach einem der Ansprüche 1 bis 4, **dadurch gekennzeichnet, dass** die Vertiefung (2) an ihrem Rand durch eine scharfe Kante begrenzt ist.

7. Luftwendestange nach einem der Ansprüche 1 bis 6, **dadurch gekennzeichnet, dass** die Vertiefung (2) zumindest eine in Längsrichtung der Vertiefung ausgerichtete Reihe von Luftaustrittsöffnungen (3) aufweist.

8. Luftwendestange nach einem der Ansprüche 1 bis 6, **dadurch gekennzeichnet, dass** mehrere Luftaustrittsöffnungen (3) über die Fläche der Vertiefung (2) verteilt sind.

9. Luftwendestange nach einem der Ansprüche 1 bis 8, **dadurch gekennzeichnet, dass** die Luftwendestange in Umfangsrichtung verdrehbar und feststellbar ist.

## Claims

1. Air turning bar for a take -off device for plastic films, in which air outlet openings are provided in that region of its circumferential surface around which the plastic film is wrapped during its transportation, **characterized in that** the air turning bar (1) has, at least in one part of the wrapping region, a depression (2) with respect to the remaining circular cylindrical circumference (6).

2. Air turning bar according to Claim 1, **characterized in that** the depression (2) is produced by pressing in a hollow air turning bar.

3. Air turning bar according to Claim 1, **characterized in that** the depression (2) is produced by a recess.

4. Air turning bar according to one of Claims 1 to 3, **characterized in that** the air turning bar (1) has, at the ends of the depression (2), as seen in the longitudinal direction of the air turning bar, a respective strip (4) having a circular cylindrical circumference.

5. Air turning bar according to one of Claims 1 to 4, **characterized in that** the depression (2) has, at its border, a rounded transitional region (5) to the circular cylindrical region (6).

6. Air turning bar according to one of Claims 1 to 4, **characterized in that** the depression (2) is bounded at its border by a sharp edge.

7. Air turning bar according to one of Claims 1 to 6, **characterized in that** the depression (2) has at least one row of air outlet openings (3) orientated in the longitudinal direction of the depression.

8. Air turning bar according to one of Claims 1 to 6, **characterized in that** a plurality of air outlet openings (3) are distributed over the surface of the depression (2).

9. Air turning bar according to one of Claims 1 to 8, **characterized in that** the air turning bar can be rotated and secured in the circumferential direction.

## Revendications

1. Barre de retournement à air pour un dispositif de tirage pour des feuilles de plastique, dans laquelle on prévoit des ouvertures de sortie d'air dans la région de sa surface périphérique enveloppée par la feuille de plastique lors de son transport, **caractérisée en ce que** la barre de retournement à air (1) présente au moins dans une partie de la région d'enveloppement un renfoncement (2) par rapport au reste de la périphérie (6) cylindrique circulaire.

2. Barre de retournement à air selon la revendication 1, **caractérisée en ce que** le renfoncement (2) est produit par une empreinte d'une barre de retournement à air creuse.

3. Barre de retournement à air selon la revendication 1, **caractérisée en ce que** le renfoncement (2) est produit par un évidement.

4. Barre de retournement à air selon l'une quelconque des revendications 1 à 3, **caractérisée en ce que** la barre de retournement à air (1) présente, au niveau des extrémités du renfoncement (2), vu dans la direction longitudinale de la barre de retournement à air, à chaque fois un ruban (4) de périphérie cylindrique circulaire.

5. Barre de retournement à air selon l'une quelconque des revendications 1 à 4, **caractérisée en ce que** le renfoncement (2) présente, sur son bord, une région de transition arrondie (5) par rapport à la région cylindrique circulaire (6).

6. Barre de retournement à air selon l'une quelconque des revendications 1 à 4, **caractérisée en ce que** le renfoncement (2) est limité au niveau de son bord par une arête vive.

7. Barre de retournement à air selon l'une quelconque des revendications 1 à 6, **caractérisée en ce que** le renfoncement (2) présente au moins une rangée d'ouvertures de sortie d'air (3) orientée dans la direction longitudinale du renfoncement.

8. Barre de retournement à air selon l'une quelconque des revendications 1 à 6, **caractérisée en ce que** plusieurs ouvertures de sortie d'air (3) sont réparties sur la surface du renfoncement (2).

9. Barre de retournement à air selon l'une quelconque des revendications 1 à 8, **caractérisée en ce que** la barre de retournement à air peut être tournée et fixée dans la direction périphérique.
